(19) Europäisches Patentamt

European Patent Office

Office européen des brevets

(11) **EP 1 617 379 A1**

(12) **EUROPÄISCHE PATENTANMELDUNG**

(43) Veröffentlichungstag:
**18.01.2006 Patentblatt 2006/03**

(51) Int Cl.:
***G06T 9/00*** *(2006.01)*     ***G02B 21/00*** *(2006.01)*

(21) Anmeldenummer: **04023509.5**

(22) Anmeldetag: **01.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **16.07.2004 DE 102004034985**

(71) Anmelder: **CARL ZEISS JENA GmbH
07745 Jena (DE)**

(72) Erfinder:
• **Engelmann, Ralf
07745 Jena (DE)**
• **Hecht, Frank
99425 Weimar (DE)**
• **Wolleschensky, Ralf
99510 Apolda (DE)**

(54) **Verfahren zur Kompression von 3D Bilddatensätzen**

(57)     Verfahren zur Erfassung von Bildern einer Probe mit einem Lichtrastermikroskop mit linienförmiger Abtastung, wobei detektierte Bilddaten , die dreidimensionalen Probenbereichen entsprechen, detektiert und abgespeichert werden,
wobei eine Datenkompression erfolgt, indem auf der Probe nebeneinander und übereinander liegende Bilddaten bei der Kompression berücksichtigt werden Vorteilhaft wird ein Bildstapel aufgenommen und jeweils benachbarte Bilder des Bildstapels zur Datenkompression herangezogen.
Es werden zeitliche und / oder spektrale detektierte und abgespeicherte Daten zur Datenkompression herangezogen werden

EP 1 617 379 A1

**Beschreibung**

Stand der Technik:

Bilddatenserien von konfokalen bzw. 4D-Mikroskopen werden bezüglich der räumlichen wie zeitlichen Informationsdichte weitgehend 1:1 abgespeichert. Die resultierenden Datenmengen erreichen mittlerweile Grössenordnungen, die mit üblichen, durchaus leistungsfähigen Rechnern nur noch zäh verarbeitet werden können. Die Archivierung der Bilddatenserien ist trotz DVD-Technik schwierig, und teilweise nur noch über Netzwerk auf teuren Fileservern möglich. Die lokaleoder gar mobile Ablage wird aus Datensicherheitsgründen ebenfalls oft bevorzugt. Zudem steigen die Scangeschwindigkeiten moderner parallelisierender konfokaler bzw. 4D-Mikroskope deutlich an, was eine weitere Vergrösserung der Datenmengen bedeutet.

Neue vorgeschlagene Lösung:

Die Erfindung beschreibt eine Methode zum effizienten Datenmanagement in der Mikroskopie. Durch Weglassen bzw. Komprimierung von Informationen bei geringer Eventdichte in einer Dimension soll Platz für die Speicherung von mehr Informationen in anderen Dimensionen mit höherer Eventdichte geschaffen werden. Das entsprechende Datenformat stellt eine Neuheit in der schnellen konfokalen bzw. 4D-Mikroskopie dar.

Zur Lösung des Problems soll in der konfokalen bzw. 4D-Mikroskopie ein neuartiges, effizientes Datenmanagement benutzt werden. Dies ist insbesondere erforderlich, da in Zukunft Langzeitexperimente mit hoher zeitlicher Auflösung in allen drei Raumdimensionen durchgeführt werden (= 4D).

Die Lösung besteht darin, dass die Informationsdichte gemäss der Eventdichte der Dimensionen angepasst wird. Dies bedeutet zunächst, dass bei geringer Eventdichte Informationen übersprungen und später durch Interpolation zurückgewonnen werden. Desweiteren wird der Datensatz komprimiert, und zwar ebenfalls verschieden stark entsprechend der Informationsdichte. Zudem erfolgt eine Wichtung der Dimensionen gegeneinander; bei geringer zeitlicher Eventdichte wird die räumliche Information höher aufgelöst, bei hoher zeitlicher Eventdichte dagegen niedriger. Innerhalb der Raumdimensionen ist wiederum X/Y (Fläche) höher gewichtet als Z (Tiefe). Für eine flüssige Komprimierung, Interpolation und spätere Darstellung solcher Bilddatenserien ist zudem eine günstige Belastung der eingesetzten Rechner erforderlich. Es bietet sich an, diese auf dem Framegrabber oder der Graphikkarte durchzuführen oder diese Komponenten zumindest mitzubelasten.

Das erforderliche diskontinuierliche und intelligente Datenformat für multimodate Bildinformationen incl. späterer Informationsrückgewinnung durch Interpolation existiert in der konfokalen bzw. 4D-Mikroskopie bisher nicht.

Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen. Diese Datensätze erreichen trotz moderater Aufnahmegeschwindigkeit erhebliche Grösse, so dass die Ergebnisse z.T. nur mathematisch und nicht visuell dargestellt werden.

Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen. Die Grösse der Datensätze stellt ein Problem dar, Originalstrukturen wurden nicht rekonstruiert.

Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

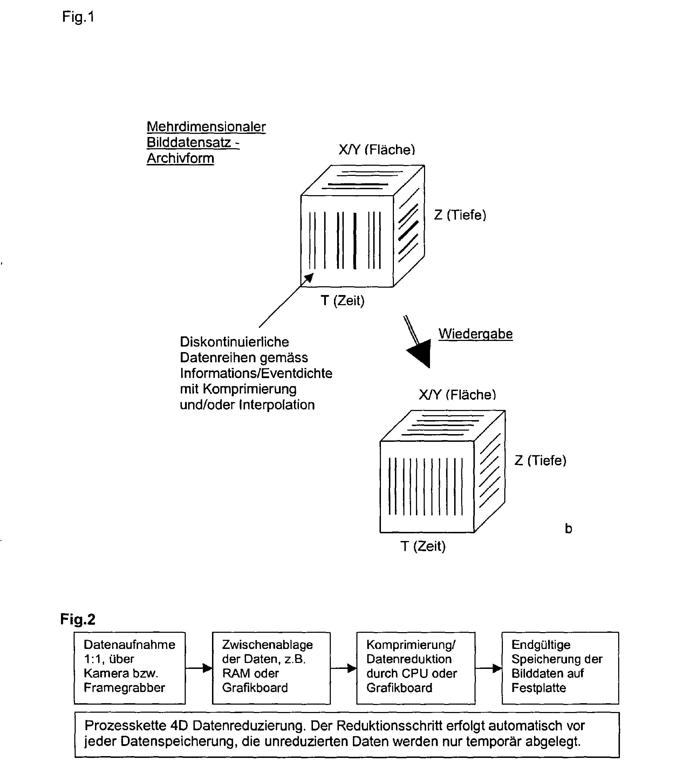

Abbildung 1 zeigt eine Prinzipdarstellung der ereignisabhängigen Datenreduktion in 4 Dimensionen und der Entzerrung bei der Widergabe.

In Fig.1a ist ein mehrdimensionaler kompletter Bilddatensatz dargestellt, bezüglich der aufgenommenen Koordinaten X,Y,Z und der dazugehörigen Aufnahmezeit t. Anhand der unterschiedlichen Strichdicke ist schematisch dargestellt, daß die Datenkomprimierung innerhalb des Bildatensatzes unterschiedlich sein kann, dickere Linien stehen beispielsweise für eine höhere Komprimierung als dünnere Linien .

In Fig.1 b ist der endgültig abgespeicherte Datensatz darggestellt , der zur Widergabe für den Benutzer dient.

Dieser hat vorteilhaft die Möglichkeit, zeitlich oder räumlich je nach Einstellung mit unterschiedlicher Auflödsdsung beobachten oder aufzeichnen zu können.

Fig. 2 zeigt schematisch den Ablauf der Datenreduzierung von der Aufnahme bis zur endgültigen Datenspeicherung.

Hier ist die gezielte Datenreduktion schematisch dargestellt:

- Datenaufnahme 1:1, über Kamera bzw. Framegrabber

- Zwischenablage der Daten, z.B. RAM oder Grafikboard
- Komprimierung/ Datenreduktion durch CPU oder Grafikboard
- Endgültige Speicherung der Bilddaten auf Festplatte

Prinzipiell kann die Datenreduzierung nach unterschiedlichen Vorgaben erfolgen:

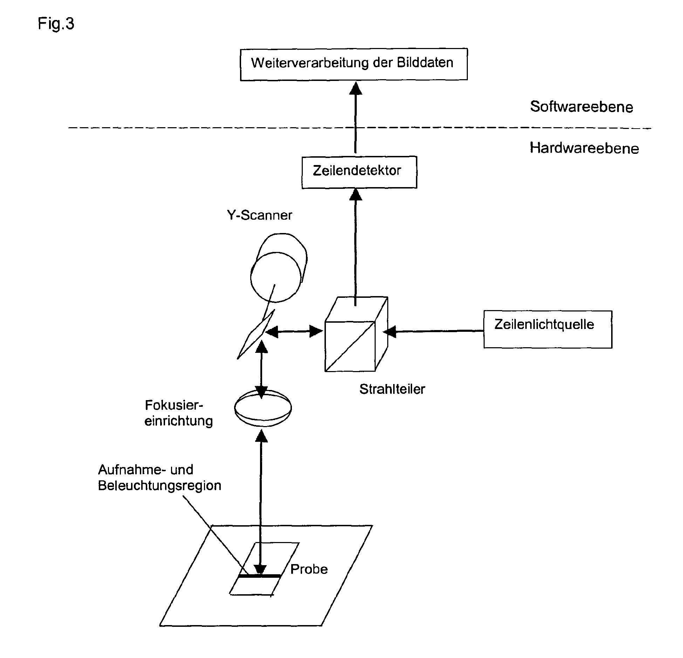

1. Automatisch:
Bei geringer zeitlicher Eventdichte könnte die räumliche Information höher aufgelöst abgespeichert werden während zeitliche Informationen ( beispielsweise durch Weglassen eines Zeittaktes ) übersprungen werden können.
Bei starken zeitlichen Änderungen ( sehr schnell bewegte Probenteile) könnte die Zeitauflösung voll beibehalten werden und die räumliche Auflösung verringert werden.
2. Durch Benutzervorgaben:
Der Benutzer legt anhand seiner Erwartungen fest, ob und wie er mit stark räumlich oder stark zeitlich veränderlichen Vorgängen rechnet und auf dieser Vorgabe wird die entsprechende Datenkomopnente reduziert bzw. beibehalten.
Der Benutzer kann auch ein- oder mehrdimensional bestimmte Bildbereiche ( Regions of Interest ) festlegen, für die eine bestimmte Datenkompression vorgenommen oder automatisch eingestellt wird.
Beispielsweise bei Ca+ imaging oder Kaede Farbstoffen ist die zeitliche Information Fig. 3 zeigt beispielhaft ein zugrundeliegendes schnelles Mikroskopsystem, welches Bilddaten in bisher unüblich grossem Umfang generiert.
Schematisch dargestellt ist ein Linienscanner mit einer Zeilenlichtquelle und einem Zeilebndetektor , wobei über einen Y Scanner eine in X Richtung liegende Beleuchtungszeile über die Probe bewegt wird,In einer Softwareebene werden die mit denm Zeilendetektor detektierten Bilddaten wir in Fig. 2 dargestellt abgespeichert.
Über eine Tischverstellung oder eine Z Verstellung der Fokussiereinrichtung wird eine vertikale Verstellung generiert, so dass Probenkoordinatren in X,Y und Z Richtung zeitabhängig abgespeichert werden.

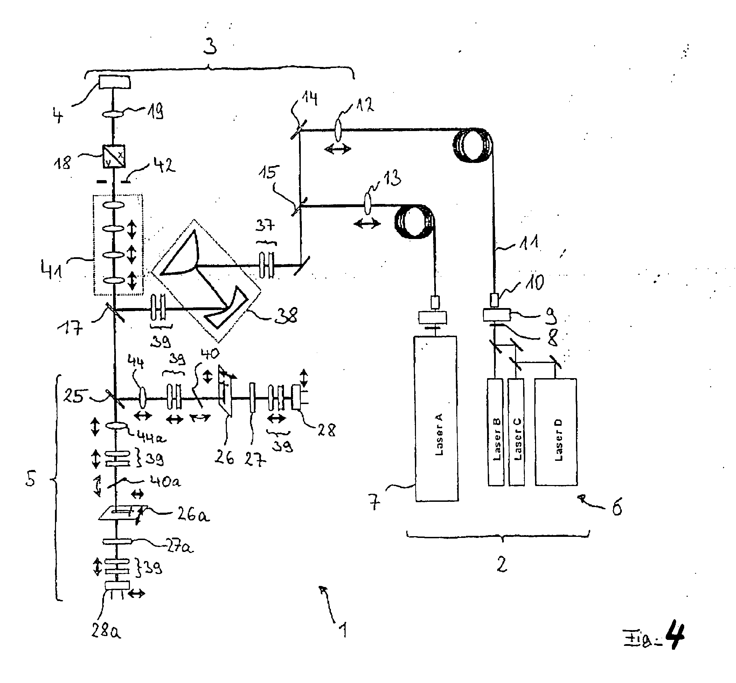

Figur 4 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 4 dargestellt ist, spektral mehrkanalig ausgeführt sein.
Zur allgemeinen Beschreibung eines punktweise abtastenden Laser Scanning Mikroskopes wird auf DE 19702753A1 verwiesen, die somit Bestandteil der hier vorliegenden Beschreibung ist.
Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.
In der beispielhaften Darstellung der Figur 4 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder -bereiche für die Anregungsstrahlung zu verwenden.
Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.
Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.
Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführungsform der Figur 4 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

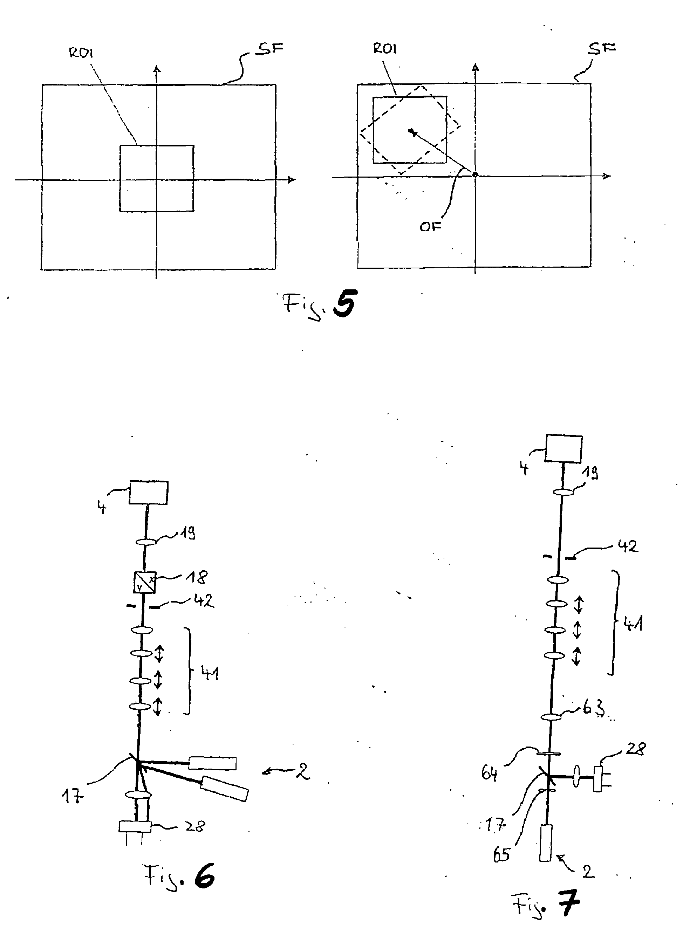

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 6 und 7 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 4 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

In der Ausführungsform der Figur 4 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 4 dargestellten, durch Pfeile symbolisierten, drei motorischen Freiheitsgrade der Zoom-Optik 41 entsprechen genau der Zahl der Freiheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht.

Figur 5 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF.

Resonanzscanner sind beispielsweise in Pawley, Handbook of Biological Confocal Microscopy , Plenum Press 1994, Seite 461ff beschrieben.

Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Figur 6 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 6 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 4 ist beim Nipkow-Scanner die Beleuchtung im Durchgang durch den Hauptfarbteiler 17 vorgenommen und die zu detektierende Strahlung wird ausgespiegelt. Darüber hinaus der Detektor 28 nun ortsauflösend ausgeführt, damit die mit der Nipkow-Scheibe 64 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 3 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 5 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 7, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 5 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier istein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

Im folgenden wird ein vorteilhaftes erfindungsgemäßes Verfahren näher erläutert:

Die Implementierung beschreibt eine Methode zur verlustbehafteten Datenkompression von 3D und 4D Daten bei der Abspeichung der Bilddaten mit einem Mikroskopsystem. Eine Datenkomprimierung von Bildstapeln in den 3 Dimensionen x, y und z wird durch die zwei Schritte der 3D-digitalen Cosinustransformation und der Quantisierung der Ergebnisse der 3D-digitalen Cosinustransformation erreicht.

Durch die Verwendung einer 3-dimensionalen digitalen Cosiunstransformation und anschließender Quantisierung läßt sich das Verhältnis von Bildqualität zu Datenmege der komprimierten Daten gegenüber dem 2-dimensionalen Verfahen für die einzelnen Ebenen eines Bildstapels wesentlich verbessern.

Der 3D-Bildstapel wird in Kuben von benachbarten Voxeln unterteilt. Ein Kubus hat m-Voxel in x-Richtung, n-Voxel in y-Richtung und o-Voxel in z-Richtung. Dabei können die einzelnen Kuben auch unterschiedliche Anzahl von Voxeln in den entsprechenden Dimensionen haben.

Im ersten Schritt werden für jeden Kubus die Werte S(w,v,u) berechnet:

$$S(w,v,u) = \frac{Cw*Cv*Cu*}{8} * \sum_{z=0}^{o-1} \sum_{y=0}^{n-1} \sum_{x=0}^{m-1} F(z,y,x,w,v,u) \qquad (I)$$

mit

$$F(z,y,x,w,v,u) = I(z,y,x) * \cos\frac{(2*x+1)*Pi*u}{2*m} * \cos\frac{(2*y+1)*Pi*v}{2*n} * \cos\frac{(2*z+1)*Pi*w}{2*o} \qquad (I\ I)$$

u = 0..m-1,
v = 0..n-1,
w = 0..o-1,

$$Cu,Cv,Cw = 1/\sqrt{2} \quad \text{für u, v = 0,}$$

und

Cu , Cv, Cw = 1, sonst.

I(z,y,x) ist die Intensität des Voxels mit den Koordinaten x, y und z relativ zum ersten Voxel des Kubus. Die n*m*o Gleitkommawerte S(w,v,u) werden anschließend mit Quantisierungsfaktoren Q(w,v,u) multipliziert und in ganze Zahlen Z(w,v,u) gewandelt.

In einem weiteren Schritt werden die Werte Z(w,v,u) in ein Array

$$T(i) = Z(Sw(i), Sv(i), Su(i)) \qquad (I\ I\ I)$$

$$i = 0... \; n*m*o \; -1$$

geschrieben. Die Werte Sw(i), Sv(i) und Su(i) werden so gewählt, dass es zu jedem Element von Z genau ein Element von T gibt. Es ist sinnvoll, Bei der Wahl von Sw(i), Sv(i) und Su(i) für niedrige Werte von i auch niedrige Werte Sw(i), Sv(i) und Su(i) zu verwenden.

Im letzten Schritt können die Werte T(i) mit verlustlosen Komprimierungsverfahen wie Huffmann-Kodierung, Arithmentische Kodierung und Lauflängenkodierung weiter komprimiert werden.

Bei der Dekomprimierung der Daten wird zunächst die verlustlose Komprimierung rückgängig gemacht. Anschießend werden die Daten mit der Umkehrfunktion von (I I I) wieder in Werte Z(w,v,u) gewandelt.

Durch Division durch die Quantisierungsfaktoren Q(w,v,u) erhält man die Gelikommawerte S'(w,v,u).

Die dekomprimierten Daten werden dann über die 3D inverse digitale Cosinustransformation bestimmt:

$$I'(z,y,x) = \frac{1}{8} * \sum_{w=0}^{o-1} \sum_{v=0}^{n-1} \sum_{u=0}^{m-1} Cw*Cv*Cu*F'(z,y,x,w,v,u) \qquad (IV)$$

mit

$$F'(z,y,x,w,v,u) = S'(w,v,u) * \cos \frac{(2*x+1)*Pi*u}{2*m} * \cos \frac{(2*y+1)*Pi*v}{2*n} * \cos \frac{(2*z+1)*Pi*w}{2*o} \qquad (V)$$

x = 0..m-1,
y = 0..n-1,
z = 0..o-1,

$$Cu, Cv, Cw = 1/\sqrt{2} \quad \text{für u, v = 0,}$$

und
Cu , Cv, Cw = 1, sonst.

Die Stärke der Komprimierung kann über die Quantisierungsfaktoren Q(w,v,u) gesteuert werden.

Das Verfahren läßt sich auch dann einsetzen, wenn Zeitserien von Bildstapeln komprimiert werden sollen. Dabei ist es auch möglich nur ausgewählte Bildstapel einer Zeitserie zu komprimieren.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen[1] und den eingesetzten Untersuchungsmethoden mit einer Vielzahl von Farbstoffen[2] ablesen.

Siehe z.B.:

[1]B. Alberts et al. (2002): Molecular Biology of the Cell; Garland Science.

[1,2]G. Karp (2002): Cell and Molecular Biology: Concepts and Experiments; Wiley Text Books.

[1,2]R. Yuste et al. (2000): Imaging neurons - a laboratory Manual; Cold Spring Harbor Laboratory Press, New York.

[2]R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

*Entwicklung von Organismen*

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:

■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.

■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.

■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:

- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden.

*Transportvorgänge in Zellen*

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:

■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.

■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.

■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

*Wechselwirkungen von Molekülen*

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:

■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.

■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.

■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

*Signalübertragung zwischen Zellen*

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:

■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.

■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

**Patentansprüche**

1.  Verfahren zur Erfassung von Bildern einer Probe mit mit einem Lichtrastermikroskop mit linienförmiger Abtastung, wobei detektierte Bilddaten , die dreidimensionalen Probenbereichen entsprechen, detektiert und abgespeichert werden, wobei eine Datenkompression erfolgt, indem auf der Probe nebeneinander und übereinander liegende Bilddaten bei der Kompression berücksichtigt werden.

2.  Verfahren nach Anspruch 1, wobei ein Bildstapel aufgenommen wird und jeweils benachbarte Bilder des Bildstapels zur Datenkompression herangezogen werden.

3.  Verfahren nach einem der vorangehenden Ansprüche , wobei zeitliche und / oder spektrale detektierte und abgespeicherte Daten zur Datenkompression herangezogen werden.

4. Verfahren nach einem der vorangehenden Ansprüche , wobei eine vorherige Einstellung des bei der Datenkompression erfaßten Volumens erfolgt.

5. Verfahren zum Erfassen von Bildern mit einem Laser Scanning- Mikroskop, insbesondere nach einem der vorangehenden Ansprüche , wobei eine Datenkompression in Abhängigkeit von der Geschwindigkeit zeitlicher Änderungen und/ oder der räumlichen Auflösung des aufgenommenen Bildes vorgenommen wird.

6. Verfahren nach einem der vorangehenden Ansprüche , wobei eine Datenkompression in unterschiedlichen Bildbereichen unterschiedlich vorgenommem wird.

7. Verfahren nach einem der vorangehenden Ansprüche , wobei die Kompressionsrate anhand der Aufnahme von Bildserien automatisch erstellt wird.

8. Verfahren nach einem der vorangehenden Ansprüche , wobei Eingabemittel zur Vorgbe des Kompressionsgrades von Bildbereichen und/ oder zeitlichen Abschnmitten einer Bildserie vorgesehen sind.

9. Verfahren nach einem der vorangehenden Ansprüche , wobei eine Abspeicherung von x,y,z,t Datensätzen in einem Datenspeicher erfolgt, der in unterschiedlichen Speicherbereichen einen unterschiedliche Kompressionsgrad der Datenspeicherung aufinreist.

10. Verfahren nach einem der vorangehenden Ansprüche, in einem Resonanzscanner, Nipkowscanner oder Multipunktscanner.

11. Verwendung von Anordnungen und/ oder Verfahren nach mindestens einem der vorangehenden Ansprüche zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:

• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

12. Verwendung von Anordnungen und/ oder Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

**13.** Verwendung von Anordnungen und/ oder Verfahren nach mindestens einem der vorangehenden Ansprüche für die Darstellung molekularer und anderer subzellulärer Wechselwirkungen ,insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen

**14.** Verwendung von Anordnungen und/ oder Verfahren nach mindestens einem der vorangehenden Ansprüche schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem

Fig.1

Mehrdimensionaler
Bilddatensatz -
Archivform

X/Y (Fläche)

Z (Tiefe)

T (Zeit)

Diskontinuierliche
Datenreihen gemäss
Informations/Eventdichte
mit Komprimierung
und/oder Interpolation

Wiedergabe

X/Y (Fläche)

Z (Tiefe)

T (Zeit)

b

**Fig.2**

| Datenaufnahme 1:1, über Kamera bzw. Framegrabber | Zwischenablage der Daten, z.B. RAM oder Grafikboard | Komprimierung/ Datenreduktion durch CPU oder Grafikboard | Endgültige Speicherung der Bilddaten auf Festplatte |
|---|---|---|---|

Prozesskette 4D Datenreduzierung. Der Reduktionsschritt erfolgt automatisch vor jeder Datenspeicherung, die unreduzierten Daten werden nur temporär abgelegt.

Fig.3

Weiterverarbeitung der Bilddaten

Softwareebene

- - - - - - - - - - - - - - - - - - - - - - - - - - - - - - - - - - - - - - - -

Hardwareebene

Zeilendetektor

Y-Scanner

Zeilenlichtquelle

Strahlteiler

Fokusiereinrichtung

Aufnahme- und
Beleuchtungsregion

Probe

EP 1 617 379 A1

Fig. 4

15

Fig. **5**

Fig. **6**

Fig. **7**

**Europäisches Patentamt**

## EUROPÄISCHER TEILRECHERCHENBERICHT

der nach Regel 45 des Europäischen Patent-übereinkommens für das weitere Verfahren als europäischer Recherchenbericht gilt

**Nummer der Anmeldung**

EP 04 02 3509

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.7) |
|---|---|---|---|
| X | DOUKOGLOU TILEMACHOS D ET AL.: "IMAGE CODING AND COMPRESSION OF CONFOCAL MICROSCOPE VOLUMETRIC 3D IMAGES" ANNU INT CONF IEEE ENG MED BIOL PROC; ANNUAL INTERNATIONAL CONFERENCE OF THE IEEE ENGINEERING IN MEDICINE AND BIOLOGY - PROCEEDINGS 1996 IEEE, PISCATAWAY, NJ, USA, Bd. 3, 1996, Seiten 1215-1217, XP002317475 * Seite 1215, Spalte 1 * ----- | 1-5,8-10 | G06T9/00 G02B21/00 |
| X | VLAICU A ET AL SOCIETY OF PHOTO-OPTICAL INSTRUMENTATION ENGINEERS (SPIE): "NEW COMPRESSION TECHNIQUES FOR STORAGE AND TRANSMISSION OF 2D AND 3D MEDICAL IMAGES" ADVANCED IMAGE AND VIDEO COMMUNICATIONS AND STORAGE TECHNOLOGIES. AMSTERDAM, MAR. 20 - 23, 1995, BELLINGHAM, SPIE, US, Bd. VOL. 2451, 1995, Seiten 370-377, XP000732674 ISBN: 0-8194-1802-1 * Seiten 370-372, Absätze 1,3 * ----- -/-- | 1-5,8-10 | |

**RECHERCHIERTE SACHGEBIETE (Int.Cl.7)**

G06T
G02B

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 16. Februar 2005 | Hambach, D |

EPO FORM 1503 03.82 (P04C09)

EP 1 617 379 A1

Europäisches
Patentamt

**EUROPÄISCHER
TEILRECHERCHENBERICHT**

Nummer der Anmeldung

EP 04 02 3509

| | EINSCHLÄGIGE DOKUMENTE | | KLASSIFIKATION DER ANMELDUNG (Int.Cl.7) |
|---|---|---|---|
| Kategorie | Kennzeichnung des Dokuments mit Angabe, soweit erforderlich der maßgeblichen Teile | Betrifft Anspruch | |
| X | BOON-LOCK YEO ET AL: "VOLUME RENDERING OF DCT-BASED COMPRESSED 3D SCALAR DATA" IEEE TRANSACTIONS ON VISUALIZATION AND COMPUTER GRAPHICS, IEEE SERVICE CENTER, PISCATAWAY, NJ, US, Bd. 1, Nr. 1, 1. März 1995 (1995-03-01), Seiten 29-42, XP000530278 ISSN: 1077-2626 * Seite 30, Absatz III.A - Seite 31 * ----- | 1-5,8-10 | |
| X | CHAN K K ET AL: "Three-dimensional transform compression of images from dynamic studies" PROC SPIE INT SOC OPT ENG; PROCEEDINGS OF SPIE - THE INTERNATIONAL SOCIETY FOR OPTICAL ENGINEERING 1990 PUBL BY INT SOC FOR OPTICAL ENGINEERING, BELLINGHAM, WA, USA, Bd. 1232, 1990, Seiten 322-326, XP002317476 * Seiten 322-323; Abbildung 1 * ----- | 1-5,8-10 | RECHERCHIERTE SACHGEBIETE (Int.Cl.7) |
| A | ROESE JOHN A ET AL: "INTERFRAME COSINE TRANSFORM IMAGE CODING" IEEE TRANS COMMUN NOV 1977, Bd. COM-25, Nr. 11, November 1977 (1977-11), Seiten 1329-1339, XP002317477 * Seite 1329 - Seite 1331; Abbildung 1 * ----- | 1-5,8-10 | |

EPO FORM 1503 03.82 (P04C12)

Europäisches
Patentamt

UNVOLLSTÄNDIGE RECHERCHE
ERGÄNZUNGSBLATT C

Nummer der Anmeldung

EP 04 02 3509

Vollständig recherchierte Ansprüche:
  1-5,8-10

Nicht recherchierte Ansprüche:
  6,7,11-14

Grund für die Beschränkung der Recherche:

Durch die Ansprüche 6 und 7 werden die Wünsche definiert, dass die Datenkompression in unterschiedlichen Bildbereichen unterschiedlich vorgenommen wird und dass die Einstellung der Kompressionsrate automatisch erfolgt. Es finden sich aber in der Beschreibung keinerlei Hinweise auf einen Algorithmus, der diese gewünschten Eigenschaften aufweist. Ein Kompressionsverfahren mit den in den Ansprüchen 6 und 7 definierten Eigenschaften ist daher nicht so offenbart, dass der Fachmann es ausführen kann (Art. 83 EPÜ). Folglich wurde ein Verfahren mit den in Anspruch 6 und 7 definierten Eigenschaften auch nicht recherchiert (Regel 45 EPÜ).

Ferner beziehen sich die Ansprüche 11-14 auf die Verwendung eines Verfahrens zu bestimmten Zwecken. Die Verwendung eines Verfahrens ist aber auch eine Abfolge von Tätigkeiten und bildet somit selbst ein Verfahren im Sinne des EPÜ (RL C-III 4.1).

Die in den Ansprüchen 11-14 definierten Verfahren werden charakterisiert durch die Angabe verschiedener Analyseprobleme, die durch das lichtmikroskopische Verfahren bearbeitet werden sollen. Es ist aber aus der Beschreibung der Anmeldung schon klar, dass die analytischen Probleme als solche dem Fachmann bekannt sind (vgl. Seiten und 17- 21 der Beschreibung, wo vorveröffentlichte Publikationen zu den in den Ansprüchen definierten Problemen zitiert werden).

Die Patentansprüche 11-14 definieren keinerlei spezielle Verfahrensschritte, die die Lösung der genannten Probleme ermöglichen. Da auch aus der Beschreibung nicht klar hervorgeht, welche Verfahrensschritte zur speziellen erfinderischen Lösung der genannten Problem führen könnten, fehlt den Patentansprüchen die in Art. 84 EPÜ geforderte Klarheit, nachdem in ihnen versucht wird, Verfahren über das jeweils erstrebte Ergebnis zu definieren. Dieser Mangel an Klarheit ist dergestalt, dass er eine sinnvolle Recherche über den erstrebten Schutzbereich der Ansprüche unmöglich war (Regel 45 EPÜ).